# EUROPEAN PATENT SPECIFICATION

(11) **EP 3 890 241 B1**
(45) Date of publication and mention of the grant of the patent: **13.12.2023**
(21) Application number: 20167230.0
(22) Date of filing: 31.03.2020
(51) Int. Cl.: H04L 12/18

(54) **METHOD AND DEVICE FOR BROADCASTING MESSAGES**
VERFAHREN UND VORRICHTUNG ZUR ÜBERTRAGUNG VON NACHRICHTEN
PROCÉDÉ ET DISPOSITIF DE DIFFUSION DE MESSAGES

(43) Date of publication of application: 06.10.2021
(73) Proprietor: Thingenious PC, 15125 Athens (GR)
(72) Inventor: Patrikakis, Charalampos, 12243 Egaleo (GR); Konstantas, Aristidis, GR-15125 Maroussi, Athens (GR); Chatzigeorgiou, Christos, 12243 Egaleo (GR); Doulgerakis, Vasileios, 12243 Egaleo (GR)
(74) Representative: Weickmann & Weickmann PartmbB

(56) References cited:
- US-A1- 2004 233 881
- US-A1- 2016 066 212
- US-A1- 2016 100 311
- US-A1- 2018 199 115
- US-B1- 10 149 159

## Description

The present invention relates to a method for broadcasting messages as well as a device and a system for performing such a method.

With the effects of climate change increasing the frequency of hazardous events such as floods, landslides, hurricanes and tornadoes, which in turn may disable the power and communication infrastructure in large areas, the need for a robust way to quickly broadcast critical information on the protection of citizens is becoming more and more important. If infrequent but unfortunately possible events such as large scale earthquakes, blizzards, extensive floods, industrial accidents or other man-made disasters are also considered, this need becomes even more evident.

Even though centrally managed systems for such purposes exist, the ability to a locally activate a system which may even be specialized to the particular conditions of the covered area may be of utmost importance. Such a system could act complimentary to existing, centrally/government administered infrastructure. In particular, in cases of emergency caused by natural catastrophic events, communication networks and the electric power grid may be unavailable. Even if power supply should still be available and communication networks are operational, the rapid increase in communication attempts by citizens as well as the volume of communication data can prohibit the safe delivery of emergency instructions. Furthermore, the ability to provide specific instructions to the citizens, considering the particularities of the particular area, creates the need for location aware targets and notifications. This need for specialized notifications is even more evident for rescue teams and first responders.

It is therefore an object of the present invention to provide a means to massively distribute target, i.e. location and situation, aware information while offering extendibility through the use of low cost devices without the need for special installations. Document US2016/0066212 A1 discloses a method for broadcasting encoded beacon signals. Document US2004/0233881 A1 discloses a route recovery device and method in a mobile ad-hoc network in which a mobile host broadcasts a service request message and further generates a relay message and then broadcasts the generated relay message to the total mobile ad-hoc network.

In order to solve this object, the present invention provides a method for broadcasting messages to devices in accordance with the subject matter of independent claim 1, a device in accordance with claim 5 as well as a system according to claim 11

With all sorts of devices able to connect to such wireless communication networks already in widespread use, employing the identification feature thereof for transmitting messages, while naturally having certain restrictions concerning for example the amount of data and thus the possible length of message, is a very robust and fail-safe approach to reach a large percentage of the population in a certain area.

Herein, the identification feature of the existing wireless protocol may be the advertisement packet feature of the Bluetooth protocol or the SSID feature of the IEEE 802.11x Wi-Fi protocol. Even though these two protocols are currently widely in use, it shall be understood that the method according to the present invention may be combined with any known wireless communication protocol or even future communication protocols as long as they comprise an identification feature which can be employed in the above-described manner. In any case, the present method corresponds to an "overloading" of the identification feature of the respective communication protocol for transporting information beyond identifying the network itself or a device establishing it. In a very simple yet illustrative example, the well-known feature of the IEEE 802.1 1x Wi-Fi protocol to be able to name the individual Wi-Fi networks may be utilized by using the message to be broadcasted as the name of a network which is established by a master device, possibly split among multiple packets given the restrictions on the possible length of network names in said standard.

The present invention thus solves its object by taking advantage of widely used technologies and the use of readily available and distributed devices, while offering low costs and being easy to widely deploy as well as upgrade. Furthermore, it offers the basis for easy and continuous updates of the communicated information, so it may always be up to date and inform its users about the current status and situation.

The wide availability of mobile devices capable of using Wi-Fi and/or Bluetooth can be utilized in the method according to the invention for delivering information in a broadcast mode and for an adequate time period. In particular, the present invention may provide a secure and resilient mode of massively delivering instructions and critical information in cases of emergency situations and it can be used to address the following needs. Firstly, it may provide a robust way for delivering critical information about emergency plans or crisis related information to rescue teams and first responders, and secondly it may massively deliver to citizens instructions and how to respond to crisis situations and how to protect themselves from hazards.

In order to further improve the method according to the invention and in particular to increase its robustness against misuse, it may additionally comprise signing the packets before their broadcast, and/or providing the packets with metadata, such as a numbering or a time stamp, and/or encrypting the message before its splitting or the packets after the splitting.

For these purposes, known encryption and signing technologies as well as all suitable sorts of metadata can be employed.

In order to retrieve the messages by end users and in a second step to scale the method according to the invention by including second, third, etc. broadcasting layers for the respective messages, the method may further comprise, for example performed by a device of a different type than the device originally broadcasting the message, receiving the message to be broadcasted, in particular via the same identification feature of an existing wireless communication protocol used for broadcasting the message, and optionally verifying the signatures of the packets of the received message. In other words, the devices may act as relay nodes for establishing a massively scalable mesh network. After said receiving and optionally verifying the message, it cannot only be displayed to end users of suitable devices but also be rebroadcasted by means of the originally selected identification feature of the wireless protocol by the receiving device. Thus, an avalanche of broadcasted messages can be achieved which can quickly and efficiently reach arbitrarily large areas and numbers of devices.

In order to ensure the integrity and completeness of the messages to be broadcasted, broadcasting of the packets may comprise sequentially broadcasting them, in particular in a rotating manner. Said broadcasting of the packets in a rotating manner may be performed regardless of the broadcasting order. Thus, over an arbitrary time spam, the message to be broadcasted will be broadcasted over and over again by circularly resending each packet.

In order to implement the method according to the invention, the invention also relates to a device for broadcasting messages using the method according to the invention and comprising a power supply, at least one wireless communication module, and a control unit powered by the power the supply unit, operatively connected to the at least one wireless communication module and adapted to perform the steps of the method according to the invention. Said power supply unit may comprise a battery, preferably a rechargeable battery, and optionally a battery charger unit. By providing the device for broadcasting messages with a battery, it will be able to operate independently from the power grid and will thus also be able to broadcast messages in the case of power outages. Another way of guaranteeing operation independently from the power grid, the power supply unit may comprise a supply source for renewable energy, such as a photovoltaic or solar panel installation, which may be combined with the device in outdoor use cases. This my even allow for the operation of the device in remote areas without any access to the power grid.

In order to enable receiving and transmitting the respective messages at the same time, which is especially important for higher layer devices, which are not the original source of the message to be broadcasted but rather serve as relay devices, the wireless communication module may comprise at least two antennas. Such devices may for example be handheld devices used by rescue teams which will not trigger the message to be broadcasted themselves but may receive and re-transmit them. Even though in single antenna configurations, it may be possible to alternately operate the antenna in reception and broadcast modes, this will cause a delay which may in some scenarios not be acceptable. In particular, for true parallelization, multiple antennas are required, since when employing a single antenna, it would have to be switched between Tx and Rx modes. More than two antennas may as well be provided in order to increase the number of messages to be transmitted simultaneously or reduce the message broadcasting cycle time.

Especially in the case of low maintenance and thus robust and easy to use devices according to the invention, they may be provided with a single control button and/or an indicator LED. Such configurations may especially be useful in cases in which only single types of messages should be possible to be broadcasted, such as a general warning or emergency information message.

Thus, pressing the single control button may trigger broadcasting said single available message, while the indicator LED may indicate sufficient remaining battery charge or the ON/OFF status of the broadcasting at any given time. In other embodiments, multi-coloured LEDs might be used which could indicate different states of the device, such as, "on", "transmitting" and "in configuration mode". However, in more elaborate embodiments, the device may also comprise any suitable input means for inputting messages to be broadcasted as well as further components generally known for such purposes.

In particular for a first layer device, i.e. the device which originally broadcasts the respective message, also referred to as a master device, it can be beneficial if its communication module may be adapted to selectively operate in a broadcast-only mode. Such configuration also contributes to a robust and easy to operate design of the device according to the invention. In a related aspect of the invention, the device may be implemented as a single board computer or may comprise one. Such devices are cheap and easy to manufacture, have low energy consumption and are robust with long expected life times.

As mentioned above in the context of creating an avalanche of broadcasted messages by employing first, second, etc. layers of devices receiving and retransmitting the messages to be broadcasted, the invention also relates to a system comprising at least one device according to the invention as a master device and at least one secondary device, which may also be a device according to the invention, which operates as a slave or relay device or is at least capable of receiving the broadcasted packets and display them to a user in a suitable manner. Herein, the master and slave or relay devices refer to the first layer and the second, third, etc. layers of message transmission, respectively, wherein the master and slave devices may be of the same type or of different type, and while the master device only needs a broadcasting function, the secondary devices may either only receive the messages and inform their users about their contents or receive and retransmit the messages and thus serve as relay devices.

For this purpose, the secondary device may be adapted to execute a software application for displaying the broadcasted messages reconstructed from the received packets. For this purpose, the packets may comprise dedicated metadata for addressing the application and differentiating themselves from packets by means of which regular access points announce their networks. In case a message is only partially available to the secondary device at a given time, for example due to packet loss or a yet incomplete transmission, the software application may also be adapted to display the incomplete message with placeholders for missing parts thereof, such as blanks or dots, which may be replaced by the yet missing packets as soon as they become available. For this purpose, a suitable numbering of the packets and possibly additional metadata such as the total number of packets should be foreseen.

Even though an operating system based retrieving of the individual packets might also be usable, the individual packets would appear mixed in with any other information broadcasted by means of the same communication protocol and it would be hard for end users to decipher the message from the scattered packets, leading to the risk of user confusion or deception through the malicious transmission of messages by third parties. Thus, if operating system based retrieving of the individual packets is selected, a special identification scheme, for example including numbering of the packets transmitted by the device, should be used, in order to distinguish the relevant packets from packets by means of which regular access points announce their networks. As an alternative to a text-based output of a message, the secondary devices may also simply output an alarm, for example operate a status LED or sound an acoustic alarm.

In order to be able to make use of the security feature of signing the packets before their broadcast, the secondary device may furthermore be adapted to execute a software application verifying the respective signatures of the broadcasted packets.

In order to rely on massively distributed end user portable devices serving as secondary slave or relay devices, said devices may be embodied by a portable user terminal, such as a mobile phone, tablet computer or a wearable device equipped with a screen, such as a smartwatch. Thus, a massively distributed network can be established by a single master device broadcasting the messages by employing the method according to the invention, while as relay devices portable end user terminals such as mobile phones are used which are widely distributed anyway and simply have to run a software application capable of either simply receiving the relevant packets and informing their users about the broadcasted message or retransmitting said packets in order to create an avalanche of message broadcasting.

Further features and advantages of the present invention will become even clearer from the following description of an embodiment thereof when viewed together with the accompanying figures. These figures in particular show:
- Figures 1a and 1b: schematic views of a device according to the invention;
- Figure 2: the operation principle of the device of Figure 1 in a schematic view; and
- Figure 3: establishing of a multilayer broadcast according to the present invention.

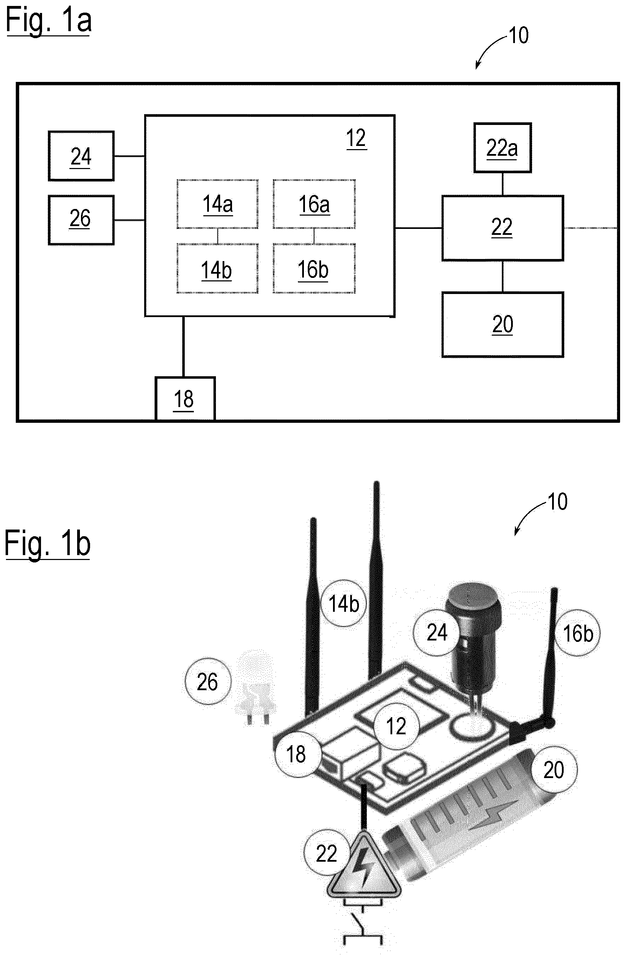

In Fig. 1a and 1b, a device according to the invention is shown in schematic views and generally denoted with the reference numeral 10. It is embodied by a single board computer 12 with minimal computing capabilities such as an integrated microcontroller, wherein on said board, a Bluetooth control module 14a and a Bluetooth antenna module 14b are provided, the latter in turn comprising two antennas, such that a concurrent broadcasting of advertisement packets and scanning for Bluetooth devices in the surroundings of the device 10 may be performed. Additionally, a WiFi (802.11) control module 16a and a single WiFi antenna 16b are provided. In alternative possible embodiments of the invention, plural WiFi antennas may be provided, only Bluetooth or WiFi functionality may be provided and/or additional communication channels and according components or any combination thereof may be provided.

The device 10 furthermore comprises an Ethernet (802.3) interface 18, by means of which the device 10 may be connected to external devices in a wired manner and by means of which the programming and/or controlling of the device may be performed. The Ethernet interface 18 as well as the WiFi components 16a and 16b may further operate as output devices for forwarding received messages to external components, e.g. for displaying the received messages. In alternative embodiments, additional or other input means may be provided and additional components such as a more powerful dedicated processing unit or a storage unit may be provided as parts of the single board computer 12, wherein a display for displaying received messages may also be directly interfaced thereto.

The power supply of the device 10 is embodied by a rechargeable battery 20 and a power supply unit 22 with an integrated dedicated charger, such that it can be ensured that while the device 10 is connected to the power grid the battery 20 will be charged and once the external power is cut, functionality of the device 10 is still guaranteed by the battery 20. The power supply unit 22 may further incorporate functionality to detect power outages and such in order to switch the device 10 to battery power and it may further comprise a main power switch 22a.

In order to switch the device 10 into broadcast mode, a control button 24 is provided, while the operation of the device 10 can be monitored by the status LED 26 which is turned on while the broadcast mode is active. In said broadcast mode, the device 10 by means of its Bluetooth and/or WiFi components in cooperation with its microcontroller or processing unit performs a broadcasting method according to the present invention.

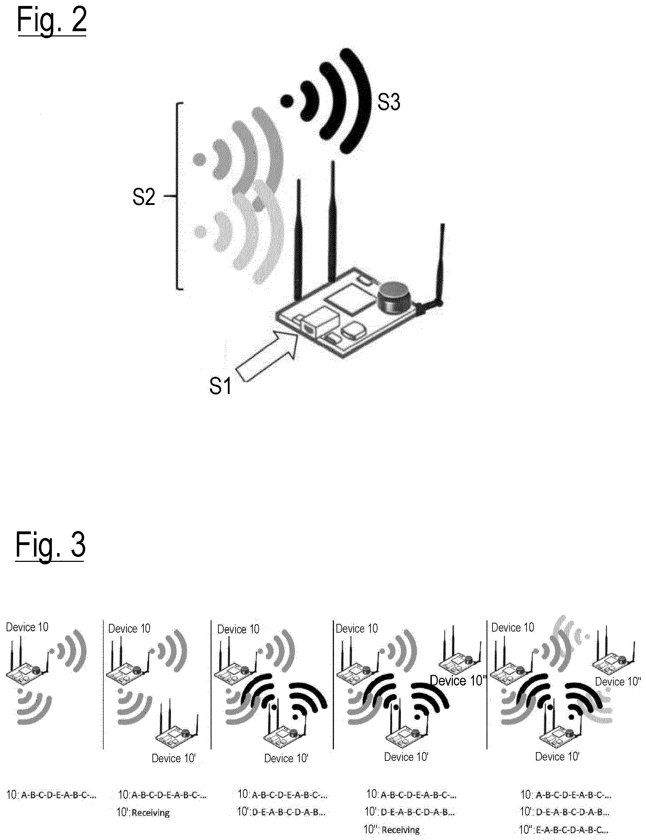

In this context, the device 10 as shown in Fig. 1a and 1b may operate both as a master device and as a relay device, as can be understood from Fig. 2. For that purpose, the device 10 may receive messages to be broadcasted both via a wired connection through its Ethernet interface 18 (arrow S1) or via its Bluetooth reception antenna which is part of the Bluetooth antenna module 14b (symbols S2). In some embodiments of the present invention, additional communication interfaces, such as means for long range radio transmissions and reception, may also be provided in device 10, wherein in said example the message to be broadcasted may initially be received by the master device from a remote device over a distance of tens or even hundreds of kilometers.

Depending on the channel over which the message to be broadcasted has been received, the microcontroller or processing unit may perform different tasks before actually broadcasting the message, namely either verifying the signatures of packets received through Bluetooth reception or configuring a message received via the Ethernet interface 18, in particular identifying the maximum length of a single packet to be broadcasted, splitting the message to be broadcasted into a number of packets the length of each not exceeding the identified maximum length and signing the packets. Additionally, the message may be encrypted and provided with metadata such as timestamps per packet. In one particular example, the advertisement packet functionality of the Bluetooth standard may be used for broadcasting the message, in which packets with a length of up to 31 octets can be sent. Thus, the message has to be split into small segments able to fit the advertisement packet length and signed by the master device before being broadcasted.

Afterwards and as shown by symbol S3, the message is broadcasted on a packet-by-packet basis wherein the packet transmission may be performed in a rotating manner. Both said rotating transmission of packets and the principle of avalanche broadcasting can be understood from Fig. 3, in which three identical devices 10, 10' and 10" are shown, of which the first device 10 operates as master or first layer device, the second device 10' operates as slave/relay or second layer device and the third device 10" operates as slave/relay or third layer device.

In Fig. 3 master device 10 initially starts broadcasting a message which has been split up into multiple packets A, B, C, D, E, which are successively broadcast. After packet E has been broadcasted, device 10 again starts with broadcasting packet A. Device 10' meanwhile receives the packets broadcasted by device 10, verifies their signatures and rebroadcasts them with a slight delay. In parallel, device 10' may display the received message to a user by means of a suitable display device.

Similarly, device 10" receives the packets broadcasted by device 10', verifies their signatures and rebroadcasts them with another slight delay. This way, an avalanche broadcast can be established with which an arbitrarily large number of devices can receive and rebroadcast the message, such that basically no limitations on the geographical range of the broadcast will have to be expected.

## Claims

1. Method for broadcasting messages (S1) to devices (10, 10', 10"), comprising:
- Identifying a maximum length of a single packet to be broadcast on the basis of a wireless communication protocol;
- Splitting a message (S1) to be broadcast into a number of packets, the length of each not exceeding the identified maximum length; and
- Broadcasting the packets by means of an identification feature of an existing wireless communication protocol via a first layer device (10), wherein the identification feature is one among the advertisement packet feature of the Bluetooth protocol and the SSID feature of the IEEE 802.11 × Wi-Fi,
**characterized by** receiving and retransmitting the packets by second layer devices (10'), third layer devices (10") and so on acting as relay devices and thus creating an avalanche of broadcast messages, wherein the second layer devices (10'), the third layer devices (10") and so on are adapted to execute a software application for displaying the broadcasted messages reconstructed from the received packets, and in a case where a message is only partially available to one or more of the second layer devices (10'), the third layer devices (10") and so on, the software application is adapted to display the incomplete message on these devices with placeholders for missing parts thereof.

2. Method according to claim 1, **characterized by**:
- Signing the packets before their broadcast; and/or
- Providing the packets with metadata, such as a numbering or a timestamp; and/or
- Encrypting the message before its splitting or the packets after the splitting.

3. Method according to any of the preceding claims, **characterized by**:
- receiving a message to be broadcast by the first layer device (10) via the same identification feature of an existing wireless communication protocol used for broadcasting the message.

4. Method according to any of the preceding claims, wherein the broadcasting of the packets comprises sequentially broadcasting them, in particular in a rotating manner.

5. Device (10, 10'; 10"), also referred to as a first layer device (10), a second layer device (10'), a third layer device (10") or so on, the device being configured for broadcasting messages using the method according to any of the preceding claims, wherein the device comprises:
- a power supply unit (20, 22),
- at least one wireless communication module (14a, 14b, 16a, 16b); and
- a control unit (12) powered by the power supply unit (20, 22), operatively connected to the at least one wireless communication module (14a, 14b, 16a, 16b) and **characterized by** having means being adapted to perform all the method steps of at least claim 1, by receiving and retransmitting the packets as a relay device.

6. Device (10'; 10") according to claim 5, wherein the power supply unit (20, 22) comprises a battery (20), preferably a rechargeable battery, and optionally a battery charger unit (22).

7. Device (10'; 10") according to claim 5 or claim 6, wherein the wireless communication module (14a, 14b, 16a, 16b) comprises at least two antennas (14b,16b).

8. Device (10'; 10") according to any of claims 5 to 7, further comprising a single control button (24) and/or an indicator LED (26).

9. Device (10'; 10") according to any of claims 5 to 8, wherein the wireless communication module (14a, 14b, 16a, 16b) is adapted to selectively operate in a broadcast-only mode.

10. Device (10; 10'; 10") according to any of claims 5 to 9, wherein the device (10; 10'; 10") is implemented as a single board computer (12) or comprises one.

11. System comprising at least one device (10) according to any of claims 5 to 10 operating as a master device and also referred to as a first layer device, and at least one secondary device (10'; 10"), according to any of claims 5 to 9, operating as a slave or relay device, the slave or relay device being also referred to as a second layer device (10') or a third layer device (10") and being capable of receiving and retransmitting the broadcast packets.

12. System according to claim 11, wherein the secondary device (10'; 10") is adapted to execute a software application for displaying the broadcast message reconstructed from the received packets.

13. System according to claim 11 or claim 12, wherein the secondary device (10'; 10") is adapted to execute a software application verifying a signature of the broadcast packets.

14. System according to any of claims 11 to 13, wherein the secondary device (10'; 10") is a portable user terminal, such as a mobile phone or a tablet computer.

## Patentansprüche

1. Verfahren zum Ausstrahlen von Nachrichten (S1) an Vorrichtungen (10, 10', 10"), umfassend:
- Identifizieren einer maximalen Länge eines einzelnen auszustrahlenden Pakets auf Grundlage eines drahtlosen Kommunikationsprotokolls;
- Aufteilen einer auszustrahlenden Nachricht (S1) in eine Anzahl von Paketen, wobei die Länge von jedem die identifizierte maximale Länge nicht übersteigt; und
- Ausstrahlen der Pakete mittels eines Identifikationsmerkmals eines existierenden drahtlosen Kommunikationsprotokolls mittels einer Vorrichtung (10) einer ersten Schicht, wobei das Identifikationsmerkmal eines aus dem Advertisement-Paket-Merkmal des Bluetooth-Protokolls und dem SSID-Merkmal des 802.11 × Wi-Fi ist,
**gekennzeichnet durch** Empfangen und erneutes Übertragen der Pakete durch Vorrichtungen (10') einer zweiten Schicht, Vorrichtungen (10") einer dritten Schicht und so weiter, welche als Weitergabe-Vorrichtungen wirken und somit eine Lawine von Ausstrahlungsnachrichten erzeugen,
wobei die Vorrichtungen (10') der zweiten Schicht, die Vorrichtungen (10") der dritten Schicht und so weiter dazu eingerichtet sind, eine Software-Anwendung für ein Anzeigen der ausgestrahlten Nachrichten auszuführen, welche aus den empfangenen Paketen rekonstruiert werden, und in einem Fall, in welchem eine Nachricht lediglich teilweise für eine oder mehrere der Vorrichtungen (10') der zweiten Schicht, der Vorrichtungen (10") der dritten Schicht und so weiter verfügbar sind, die Software-Anwendung dazu eingerichtet ist, die unvollständige Nachricht an diesen Vorrichtungen mit Platzhaltern für fehlende Teile davon anzuzeigen.

2. Verfahren nach Anspruch 1, **gekennzeichnet durch**:
- Signieren der Pakete vor ihrer Ausstrahlung; und/oder
- Versehen der Pakete mit Metadaten, wie beispielsweise einer Nummerierung oder eines Zeitstempels; und/oder
- Verschlüsseln der Nachricht vor ihrem Aufteilen oder der Pakete nach dem Aufteilen.

3. Verfahren nach einem der vorhergehenden Ansprüche, **gekennzeichnet durch**:
- Empfangen einer auszustrahlenden Nachricht durch eine Vorrichtung (10) der ersten Schicht mittels desselben Identifikationsmerkmals eines existierenden drahtlosen Kommunikationsprotokolls, welches für das Ausstrahlen der Nachricht verwendet wird.

4. Verfahren nach einem der vorhergehenden Ansprüche, wobei das Ausstrahlen der Pakete ein sequentielles Ausstrahlen davon umfasst, insbesondere in einer rotierenden Weise.

5. Vorrichtung (10, 10'; 10"), auch bezeichnet als eine Vorrichtung (10) einer ersten Schicht, eine Vorrichtung (10') einer zweiten Schicht, eine Vorrichtung (10") einer dritten Schicht oder so weiter, wobei die Vorrichtung für ein Ausstrahlen von Nachrichten unter Verwendung des Verfahrens nach einem der vorhergehenden Ansprüche eingerichtet ist, wobei die Vorrichtung umfasst:
- eine Leistungsversorgungseinheit (20, 22),
- wenigstens ein drahtloses Kommunikationsmodul (14a, 14b, 16a, 16b); und
- eine Steuereinheit (12), welche von der Leistungsversorgungseinheit (20, 22) mit Leistung versorgt wird, welche betriebsmäßig mit dem wenigstens einen drahtlosen Kommunikationsmodul (14a, 14b, 16a, 16b) verbunden ist und **dadurch gekennzeichnet ist, dass** sie Mittel aufweist, welche dazu eingerichtet sind, alle der Verfahrensschritte von wenigstens Anspruch 1 auszuführen, indem die Pakete als eine Weitergabe-Vorrichtung empfangen und erneut übertragen werden.

6. Vorrichtung (10'; 10") nach Anspruch 5, wobei die Leistungsversorgungseinheit (20, 22) eine Batterie (20) umfasst, vorzugsweise eine wiederaufladbare Batterie, sowie optional eine Batterie-Ladeeinheit (22).

7. Vorrichtung (10'; 10") nach Anspruch 5 oder Anspruch 6, wobei das drahtlose Kommunikationsmodul (14a, 14b, 16a, 16b) wenigstens zwei Antennen (14b, 16b) umfasst.

8. Vorrichtung (10'; 10") nach einem der Ansprüche 5 bis 7, ferner umfassend einen einzelnen Steuerknopf (24) und/oder eine Anzeige-LED (26).

9. Vorrichtung (10'; 10") nach einem der Ansprüche 5 bis 8, wobei das drahtlose Kommunikationsmodul (14a, 14b, 16a, 16b) dazu eingerichtet ist, selektiv in einem Nur-Ausstrahlungsmodus zu arbeiten.

10. Vorrichtung (10; 10'; 10") nach einem der Ansprüche 5 bis 9, wobei die Vorrichtung (10; 10'; 10") als ein Einzelplatinen-Computer (12) implementiert ist oder einen umfasst.

11. System, umfassend wenigstens eine Vorrichtung (10) nach einem der Ansprüche 5 bis 10, welche als Master-Vorrichtung arbeitet und ebenfalls als eine Vorrichtung einer ersten Schicht bezeichnet wird, sowie wenigstens eine sekundäre Vorrichtung (10'; 10") nach einem der Ansprüche 5 bis 9, welche als eine Slave- oder Weitergabe-Vorrichtung arbeitet, welche auch als eine Vorrichtung (10') einer zweiten Schicht oder eine Vorrichtung (10") einer dritten Schicht bezeichnet wird und in der Lage ist, die ausgestrahlten Pakete zu empfangen und erneut zu übertragen.

12. System nach Anspruch 11, wobei die sekundäre Vorrichtung (10'; 10") dazu eingerichtet ist, eine Software-Anwendung für ein Anzeigen der ausgestrahlten Nachricht auszuführen, welche aus den empfangenen Paketen rekonstruiert wird.

13. System nach Anspruch 11 oder Anspruch 12, wobei die sekundäre Vorrichtung (10'; 10") dazu eingerichtet ist, eine Software-Anwendung auszuführen, welche eine Signatur der ausgestrahlten Pakete verifiziert.

14. System nach einem der Ansprüche 11 bis 13, wobei die sekundäre Vorrichtung (10'; 10") ein tragbares Benutzer-Endgerät ist, wie beispielsweise ein Mobiltelefon oder ein Tablet-Computer.

## Revendications

1. Procédé pour diffuser des messages (S1) vers des dispositifs (10, 10', 10''), comprenant les étapes consistant à :
- identifier une longueur maximale d'un unique paquet à diffuser sur la base d'un protocole de communication sans fil ;
- diviser un message (S1) à diffuser en un nombre de paquets, la longueur de chaque paquet ne dépassant pas la longueur maximale identifiée ; et
- diffuser les paquets au moyen d'une caractéristique d'identification d'un protocole de communication sans fil existant par le biais d'un dispositif de première couche (10) ,
dans lequel la caractéristique d'identification est une caractéristique entre la caractéristique de paquets d'annonce du protocole Bluetooth et la caractéristique SSID de la norme IEEE 802.11 × Wi-Fi,
**caractérisé par** une réception et une retransmission des paquets par des dispositifs de deuxième couche (10'), par des dispositifs de troisième couche (10") et ainsi de suite servant de dispositifs relais et créant ainsi une avalanche de messages de diffusion,
dans lequel les dispositifs de deuxième couche (10'), les dispositifs de troisième couche (10") et ainsi de suite sont aptes à exécuter une application logicielle à des fins d'affichage des messages diffusés reconstruits à partir des paquets reçus, et dans un cas dans lequel un message n'est que partiellement disponible pour un ou plusieurs des dispositifs de deuxième couche (10'), des dispositifs de troisième couche (10'') et ainsi de suite, l'application logicielle est apte à afficher le message incomplet sur ces dispositifs avec des emplacements réservés pour ses parties manquantes.

2. Procédé selon la revendication 1, **caractérisé par** les étapes consistant à :
- signer les paquets avant leur diffusion ; et/ou
- doter les paquets de métadonnées, telles qu'un numérotage ou une estampille temporelle ; et/ou
- chiffrer le message avant sa division ou les paquets après la division.

3. Procédé selon l'une quelconque des revendications précédentes, **caractérisé par** l'étape consistant à :
- recevoir un message à diffuser par le dispositif de première couche (10) par le biais de la même caractéristique d'identification d'un protocole de communication sans fil existant utilisé pour diffuser le message.

4. Procédé selon l'une quelconque des revendications précédentes, dans lequel la diffusion des paquets consiste à les diffuser successivement, en particulier d'une manière tournante.

5. Dispositif (10, 10' ; 10''), également appelé dispositif de première couche (10), dispositif de deuxième couche (10'), dispositif de troisième couche (10") ou ainsi de suite, le dispositif étant configuré pour diffuser des messages au moyen du procédé selon l'une quelconque des revendications précédentes, dans lequel le dispositif comprend :
- une unité d'alimentation électrique (20, 22),
- au moins un module de communication sans fil (14a, 14b, 16a, 16b) ; et
- une unité de commande (12) alimentée par l'unité d'alimentation électrique (20, 22), connectée de manière fonctionnelle à l'au moins un module de communication sans fil (14a, 14b, 16a, 16b) et **caractérisée en ce qu'**elle comporte un moyen conçu pour mettre en œuvre toutes les étapes du procédé selon la revendication 1, par une réception et une retransmission des paquets en tant que dispositif relais.

6. Dispositif (10' ; 10") selon la revendication 5, dans lequel l'unité d'alimentation électrique (20, 22) comprend une batterie (20), de préférence une batterie rechargeable, et éventuellement une unité chargeur de batterie (22).

7. Dispositif (10' ; 10'') selon la revendication 5 ou la revendication 6, dans lequel le module de communication sans fil (14a, 14b, 16a, 16b) comprend au moins deux antennes (14b, 16b).

8. Dispositif (10' ; 10'') selon l'une quelconque des revendications 5 à 7, comprenant en outre un unique bouton de commande (24) et/ou une DEL témoin (26).

9. Dispositif (10' ; 10'') selon l'une quelconque des revendications 5 à 8, dans lequel le module de communication sans fil (14a, 14b, 16a, 16b) est apte à fonctionner sélectivement dans un mode uniquement de diffusion.

10. Dispositif (10 ; 10' ; 10'') selon l'une quelconque des revendications 5 à 9, dans lequel le dispositif (10 ; 10' ; 10'') est implémenté en tant qu'ordinateur monocarte (12) ou en comprend un.

11. Système comprenant au moins un dispositif (10) selon l'une quelconque des revendications 5 à 10 fonctionnant en tant que dispositif maître et également appelé dispositif de première couche, et au moins un dispositif secondaire (10' ; 10"), selon l'une quelconque des revendications 5 à 9, fonctionnant en tant que dispositif esclave ou relais, le dispositif esclave ou relais étant également appelé dispositif de deuxième couche (10') ou dispositif de troisième couche (10'') et étant apte à recevoir et à retransmettre les paquets de diffusion.

12. Système selon la revendication 11, dans lequel le dispositif secondaire (10' ; 10") est apte à exécuter une application logicielle à des fins d'affichage du message de diffusion reconstruit à partir des paquets reçus.

13. Système selon la revendication 11 ou la revendication 12, dans lequel le dispositif secondaire (10' ; 10'') est apte à exécuter une application logicielle vérifiant une signature des paquets de diffusion.

14. Système selon l'une quelconque des revendications 11 à 13, dans lequel le dispositif secondaire (10' ; 10'') est un terminal d'utilisateur portatif, tel qu'un téléphone mobile ou une tablette électronique.
